# EUROPEAN PATENT SPECIFICATION

(11) **EP 4 510 266 B1**
(45) Date of publication and mention of the grant of the patent: **02.12.2026**
(21) Application number: 24190179.2
(22) Date of filing: 23.07.2024
(51) Int. Cl.: H01M 10/0525, H01M 10/0567, H01M 10/0569

(54) **ELECTROLYTE FOR RECHARGEABLE LITHIUM BATTERY AND RECHARGEABLE LITHIUM BATTERY INCLUDING THE SAME**
ELEKTROLYT FÜR EINE WIEDERAUFLADBARE LITHIUMBATTERIE UND WIEDERAUFLADBARE LITHIUMBATTERIE DAMIT
ÉLECTROLYTE POUR BATTERIE AU LITHIUM RECHARGEABLE ET BATTERIE AU LITHIUM RECHARGEABLE LE COMPRENANT

(30) Priority: 27.07.2023 KR 20230098400
(43) Date of publication of application: 19.02.2025
(73) Proprietor: SAMSUNG SDI CO., LTD., Giheung-gu Yongin-si, Gyeonggi-do 17084 (KR)
(72) Inventor: Bae, Tae Hyon, 17084 Yongin-si, Gyeonggi-do (KR); Lee, Harim, 17084 Yongin-si, Gyeonggi-do (KR); Kim, Sanghyung, 17084 Yongin-si, Gyeonggi-do (KR); Son, Seunghyeon, 17084 Yongin-si, Gyeonggi-do (KR); Shin, Youngkyeong, 17084 Yongin-si, Gyeonggi-do (KR); Kim, Sanghoon, 17084 Yongin-si, Gyeonggi-do (KR); Yu, Arum, 17084 Yongin-si, Gyeonggi-do (KR)
(74) Representative: Gulde & Partner

(56) References cited:
- EP-A1- 3 168 849
- EP-A1- 4 213 260
- EP-A1- 4 213 267
- KR-A- 20210 003 587

## Description

### BACKGROUND

### 1. Field

Embodiments of the present invention described herein are related to an electrolyte for a rechargeable lithium battery and a rechargeable lithium battery including the same.

### 2. Description of the Related Art

Recently, with the rapid spread of electronic devices that utilize batteries, such as mobile phones, laptop computers, and/or vehicles (e.g., electric vehicles), the demand for rechargeable batteries with relatively high energy density and relatively high capacity is increasing. Accordingly, research and development to improve the performance of rechargeable lithium batteries is desired.

A rechargeable lithium battery includes a positive electrode and a negative electrode each including an active material capable of intercalating and deintercalating lithium ions, and an electrolyte. Electrical energy may be produced through oxidation and reduction reactions if lithium ions are intercalated/deintercalated to/from the positive electrode and negative electrode. For example, EP 4 213 260 A1 discloses a lithium secondary including: a positive electrode; a separator; a negative electrode that is free of a negative electrode active material; and an electrolytic solution, in which the electrolytic solution contains one or more fluorine solvents selected from ether compounds. EP 4 213 267 A1 describes a lithium secondary battery including a positive electrode, a separator, a negative electrode that is free of a negative electrode active material, and an electrolytic solution, in which the electrolytic solution contains, as a solvent, a compound having at least one of a monovalent group represented by Formula (A) or a monovalent group represented by Formula (B). KR 20210003587 A relates to a lithium-sulfur secondary battery comprising a positive electrode, a negative electrode, a separator, and an electrolyte, wherein the electrolyte contains a solvent and a lithium salt. EP 3 168 849 A1 discloses a nonaqueous lithium-type power storage element comprising an electrode laminate body having a negative electrode body, a positive electrode body and a separator, and a nonaqueous electrolyte.

One area of interest of research for a rechargeable lithium battery is to increase a density of the negative electrode. However, if the density of the negative electrode is increased, void volumes can decrease, which can increase an amount of electrolyte impregnated into the negative electrode, causing an increase in the thickness of the battery and a decrease in its cycle-life.

### SUMMARY

The invention is defined by the appended claims. The description that follows is subjected to this limitation. Any disclosure lying outside the scope of said claims is only intended for illustrative as well as comparative purposes. Aspects according to one or more embodiments are directed toward an electrolyte for a rechargeable lithium battery that suppresses an increase in battery thickness and a decrease in cycle-life even if density of the negative electrode is increased.

Aspects according to one or more embodiments are directed toward a rechargeable lithium battery including the electrolyte for a rechargeable lithium battery.

Aspects according to one or more embodiments are directed toward an electrolyte for a rechargeable lithium battery that can suppress or reduce an increase in battery thickness and a decrease in cycle-life even if density of the negative electrode is increased.

Additional aspects will be set forth in part in the description which follows and, in part, will be apparent from the description, or may be learned by practice of the presented embodiments of the present invention.

The present invention is set out in the appended set of claims, wherein the drawings and respective description relate to advantageous embodiments thereof. According to the present invention, an electrolyte for a rechargeable lithium battery includes a lithium salt; a non-aqueous organic solvent; a first additive represented by Chemical Formula 1-1-1: 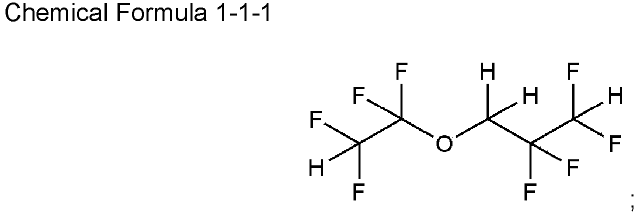 and
a second additive represented by Chemical Formula 2-1-1:

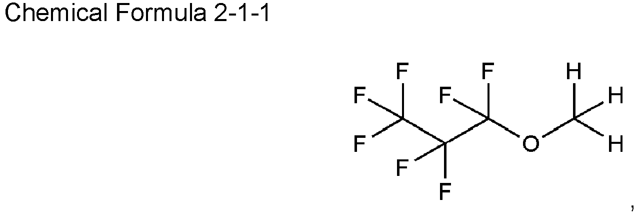

According to one or more embodiments, a rechargeable lithium battery may include a positive electrode including a positive electrode active material; a negative electrode including a negative electrode active material; and the electrolyte.

### BRIEF DESCRIPTION OF THE DRAWINGS

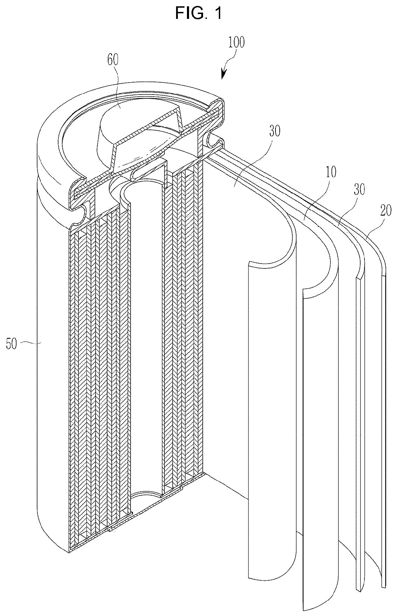

FIGS. 1-4 are schematic views showing rechargeable lithium batteries according to one or more embodiments.

### DETAILED DESCRIPTION

Hereinafter, embodiments of the present invention will be described in more detail. However, these embodiments are examples, the present invention is not limited thereto and the present invention is defined by the scope of claims.

As utilized herein, if specific definition is not otherwise provided, it will be understood that if an element such as a layer, film, region, or substrate is referred to as being "on" another element, it can be directly on the other element or intervening elements may also be present.

As utilized herein, expressions such as "at least one of", "one of", and "of (e.g., selected from among)", when preceding a list of elements, modify the entire list of elements and do not modify the individual elements of the list. For example, "at least one of a, b or c", "at least one selected from among a, b and c", and/or the like, may indicate only a, only b, only c, both a and b, both a and c, both b and c, all of a, b, and c, or variations thereof.

The term utilized herein is intended to describe only a specific embodiment and is not intended to limit the present invention. As utilized herein, the singular forms "a," "an," and "the" are intended to include the plural forms, including "at least one," unless the content clearly indicates otherwise. "At least one" should not be construed as being limited to the singular. As utilized herein, the term "and/or" includes any and all combinations of one or more of the associated listed items. The terms "includes," "including," "comprises," and/or "comprising," when utilized in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be utilized herein to easily describe one element or feature's relationship to another element or feature. It will be understood that the spatially relative terms are intended to encompass different orientations of a device in utilize or operation in addition to the orientation illustrated in the drawings. For example, when a device in the drawings is turned over, elements described as "below" or "beneath" other elements or features would then be "above" or "over" the other elements or features. In some embodiments, the example term "below" may encompass both orientations of above and below. The device may be otherwise oriented (rotated 90 degrees or at other orientations), and the spatially relative terms utilized herein may be interpreted accordingly.

The term "metal" as utilized herein includes all of metals and metalloids such as silicon and germanium in an elemental or ionic state.

The term "alloy" as utilized herein refers to a mixture of two or more metals.

The term "electrode active material" as utilized herein refers to an electrode material that may undergo lithiation and delithiation.

The term "composite cathode active material" as utilized herein refers to a cathode material that may undergo lithiation and delithiation.

The term "anode active material" as utilized herein refers to an anode material that may undergo lithiation and delithiation.

The terms "lithiate" and "lithiating" as utilized herein refer to a process of adding lithium to an electrode active material.

The terms "delithiate" and "delithiating" as utilized herein refer to a process of removing lithium from an electrode active material.

The terms "charge" and "charging" as utilized herein refer to a process of providing electrochemical energy to a battery.

The terms "discharge" and "discharging" as utilized herein refer to a process of removing electrochemical energy from a battery.

The terms "positive electrode" and "cathode" as utilized herein refer to an electrode at which electrochemical reduction and lithiation occur during a discharging process.

The terms "negative electrode" and "anode" as utilized herein refer to an electrode at which electrochemical oxidation and delithiation occur during a discharging process.

Also, any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

As utilized herein, "a combination thereof" may refer to a mixture of constituents, a stack, a composite, a copolymer, an alloy, a blend, and a reaction product.

As utilized herein, the "active mass density of the negative electrode" is a value calculated by dividing a weight of the components (active material, conductive material, binder, and/or the like.) excluding the current collector in the negative electrode by a volume thereof.

As utilized herein, if a definition is not otherwise provided, in chemical formulae, hydrogen is bonded at the position if a chemical bond is not drawn where supposed to be given.

As utilized herein, "fluoroalkyl group" refers to an alkyl group in which some or all of the hydrogen atoms are replaced by fluorine atoms.

As utilized herein, "perfluoroalkyl group" refers to an alkyl group in which all hydrogen atoms are replaced by fluorine atoms.

### Electrolyte

An electrolyte for a rechargeable lithium battery includes a salt; a non-aqueous organic solvent; a first additive represented by Chemical Formula 1-1-1; and a second additive represented by Chemical Formula 2-1-1.

The first additive and the second additive function as a surfactant having both hydrophilic and hydrophobic groups in one molecule, respectively.

Accordingly, if an electrolyte including the first additive and the second additive concurrently is used, wettability of the positive electrode and negative electrode is improved, lithium cation (Li⁺) are uniformly formed (e.g., substantially uniformly formed) at the interface between the positive electrode and the electrolyte, and a stable SEI film is formed at the interface between the negative electrode and the electrolyte, suppressing or reducing the precipitation of lithium dendrites.

Therefore, if an electrolyte including both the first additive and the second additive is utilized, an increase in the thickness and a decrease in the cycle-life of the battery can be suppressed or reduced even if the density of the negative electrode is increased.

Hereinafter, the electrolyte according to one or more embodiments will be described in more detail.

### First Additive

The first additive is represented by Chemical Formula 1-1-1:

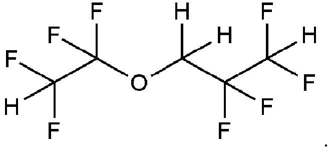

### Second Additive

The second additive is represented by:

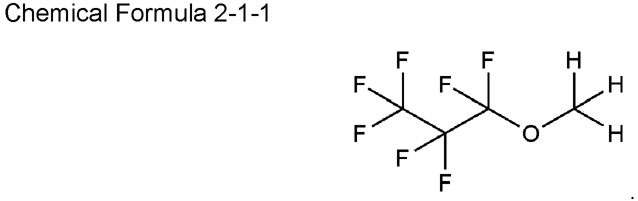

### Contents of First Additive and Second Additive

The first additive may be included in an amount of 1 wt% to 10 wt%, 1 wt% to 5 wt%, or 1 wt% to 3 wt%.

If the first additive is included in excess of the above range, viscosity of the electrolyte including the first additive may increase excessively (or substantially), and wettability of the positive electrode and the negative electrode may actually decrease. In contrast, if the content of the first additive is included in a small amount below the above range, the effect as a surfactant may be minimal.

The second additive may be included in an amount of 1 wt% to 10 wt%, 1 wt% to 5 wt%, or 1 wt% to 3 wt%.

If the second additive is included in excess of the above range, a viscosity of the electrolyte including the second additive may increase excessively (or substantially), and the wettability of the positive electrode and negative electrode may actually decrease. In contrast, if the content of the second additive is included in a small amount below the above range, an effect as a surfactant may be minimal.

A weight ratio of the first additive and the second additive may be 10:1 to 1:10, 5:1 to 1:5, or 3:1 to 1:3.

Within this range, the effects of the first additive and the second additive can be harmonized.

### Non-aqueous Organic Solvent

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, and/or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methyl propionate, ethyl propionate, propyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethyl alcohol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether group), amides such as dimethylformamide, dioxolanes such as 1,3-dioxolane or 1,4-dioxolane, sulfolanes, and/or the like.

The non-aqueous organic solvent may be utilized alone or in combination of two or more.

In one or more embodiments, the non-aqueous organic solvent may include a carbonate-based solvent and a propionate-based solvent.

The total propionate-based solvent may be included in an amount of greater than or equal to 70 volume% based on a total amount of the non-aqueous organic solvent. In this case, relatively high-voltage and/or relatively high-temperature characteristics of the rechargeable lithium battery may be improved.

For example, the non-aqueous organic solvent may be a mixed solvent of ethylene carbonate (EC), propylene carbonate (PC), ethyl propionate (EP), and propyl propionate (PP).

### Lithium Salt

The lithium salt dissolved in the organic solvent supplies lithium ions in a battery, enables a basic operation of a rechargeable lithium battery, and improves transportation of the lithium ions between positive and negative electrodes.

LiPF₆ may be utilized as the lithium salt.

A concentration of the lithium salt may be 0.1 M to 2.0 M.

### Rechargeable Lithium Battery

One or more embodiments provide a rechargeable lithium battery including a positive electrode including a positive electrode active material; a negative electrode including a negative electrode active material; and the electrolyte.

### Active Mass Density of Negative Electrode

Rechargeable lithium batteries utilize a negative electrode with an active mass density of less than 1.68 g/cc, but a rechargeable lithium battery according to one or more embodiments uses a negative electrode with a mixture density of greater than or equal to 1.68 g/cc.

The upper limit for the active mass density of the negative electrode is not particularly limited, but may be less than or equal to 2.0 g/cc, less than or equal to 1.9 g/cc, or less than or equal to 1.8 g/cc.

### Charge Upper Limit Voltage

As the rechargeable lithium battery according to one or more embodiments includes the electrolyte of the aforementioned embodiment, an increase in thickness and a decrease in cycle-life can be suppressed or reduced even if the density of the negative electrode is increased.

For example, the rechargeable lithium battery may have an upper charge limit voltage of greater than or equal to 4.4 V.

Hereinafter, descriptions that overlap with the above will not be provided, and a rechargeable lithium battery according to one or more embodiments will be described in more detail.

### Positive Electrode Active Material

The positive electrode active material may be a compound (lithiated intercalation compound) capable of intercalating and deintercallating lithium. For example, one or more types (kinds) of composite oxides of lithium and a metal selected from among cobalt, manganese, nickel, and/or combinations thereof may be utilized.

The composite oxide may be a lithium transition metal composite oxide, and specific examples may include lithium nickel-based oxide, lithium cobalt-based oxide, lithium manganese-based oxide, a lithium iron phosphate-based compound, cobalt-free lithium nickel-manganese-based oxide, and/or a combination thereof.

As an example, a compound represented by any of (e.g., selected from among) the following chemical formulas may be utilized: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and/or LiₐFePO₄ (0.90≤a≤1.8).

In the above chemical formulas, A is Ni, Co, Mn, and/or a combination thereof; X is Al, Ni, Co, Mn, Cr, Fe, Mg, Sr, V, a rare earth element, and/or a combination thereof; D is O, F, S, P, and/or a combination thereof; G is Al, Cr, Mn, Fe, Mg, La, Ce, Sr, V, and/or a combination thereof; and L¹ is Mn, Al, and/or a combination thereof.

As an example, the positive electrode active material may have a nickel content of greater than or equal to 80 mol%, greater than or equal to 85 mol%, greater than or equal to 90 mol%, greater than or equal to 91 mol%, or greater than or equal to 94 mol% based on 100 mol% of metals excluding lithium in the lithium transition metal composite oxide. In one or more embodiments, the positive electrode active material may be a relatively high nickel-based positive electrode active material of less than or equal to 99 mol% based on 100 mol% of metals excluding lithium in the lithium transition metal composite oxide. The relatively high-nickel-based positive electrode active materials can achieve relatively high capacity and can be applied to relatively high-capacity, relatively high-density rechargeable lithium batteries.

The positive electrode active material may be, for example, lithium nickel-based oxide represented by Chemical Formula 11, lithium cobalt-based oxide represented by Chemical Formula 12, a lithium iron phosphate-based compound represented by Chemical Formula 13, and cobalt-free lithium nickel manganese-based oxide represented by Chemical Formula 14, and/or a combination thereof.

Chemical Formula 11 Liₐ₁Niₓ₁M¹_{y1}M²_{z1}O_{2-b1}X_{b1}

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² may each independently be one or more elements selected from among Al, B, Ba, Ca, Ce, Co, Cr, Cu, Fe, Mg, Mn, Mo, Nb, Si, Sn, Sr, Ti, V, W, and Zr, and X is one or more elements selected from among F, P, and S.

In Chemical Formula 1, 0.6≤x1≤1, 0≤y1≤0.4, and 0≤z1≤0.4, or 0.8≤x1≤1, 0≤y1≤0.2, and 0≤z1≤0.2.

Chemical Formula 12 Liₐ₂Coₓ₂M³_{y2}O_{2-b2}X_{b2}

In Chemical Formula 12, 0.9≤a2≤1.8, 0.7≤x2≤1, 0≤y2≤0.3, 0.9≤x2+y2≤1.1, and 0≤b2≤0.1, M² is one or more elements selected from among Al, B, Ba, Ca, Ce, Cr, Cu, Fe, Mg, Mn, Mo, Ni, Se, Si, Sn, Sr, Ti, V, W, Y, Zn, and Zr, and X is one or more elements selected from among F, P, and S.

Chemical Formula 13 Liₐ₃Feₓ3M⁴_{y3}PO_{4-b3}X_{b3}

In Chemical Formula 13, 0.9≤a3≤1.8, 0.6≤x3≤1, 0≤y3≤0.4, and 0≤b3≤0.1, M⁴ is one or more elements selected from among Al, B, Ba, Ca, Ce, Co, Cr, Cu, Mg, Mn, Mo, Ni, Se, Si, Sn, Sr, Ti, V, W, Y, Zn, and Zr, and X is one or more elements selected from among F, P, and S.

Chemical Formula 14 Liₐ₄Niₓ₄Mn_{y4}M⁵_{z4}O_{2-b4}X_{b4}

In Chemical Formula 14, 0.9≤a2≤1.8, 0.8≤x4<1, 0<y4≤0.2, 0≤z4≤0.2, 0.9≤x4+y4+z4≤1.1, and 0≤b4≤0.1 M⁵ is one or more elements selected from among Al, B, Ba, Ca, Ce, Cr, Fe, Mg, Mo, Nb, Si, Sn, Sr, Ti, V, W, and Zr, and X is one or more elements selected from among F, P, and S.

For example, the electrolyte of the above-described embodiment can significantly improve relatively high-voltage and/or relatively high-temperature characteristics of a battery utilizing the lithium cobalt-based oxide represented by Chemical Formula 12.

### Positive Electrode

The positive electrode for a rechargeable lithium battery may include a current collector and a positive electrode active material layer on the current collector. The positive electrode active material layer may include a positive electrode active material and may further include a binder and/or a conductive material.

For example, the positive electrode may further include an additive that can function as a sacrificial positive electrode.

A content of the positive electrode active material may be 90 wt% to 99.5 wt%, and a content of the binder and the conductive material may be 0.5 wt% to 5 wt%, respectively based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, as non-limiting examples.

The conductive material may be utilized to impart conductivity (e.g., electrical conductivity) to the electrode. Any material that does not cause chemical change (e.g., does not cause an undesirable chemical change in the rechargeable lithium battery) and conducts electrons can be utilized in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, and/or the like., in a form of a metal powder or a metal fiber; a conductive polymer such as a polyphenylene derivative; and/or a mixture thereof (e.g., a suitable mixture thereof).

Al may be utilized as the current collector, but the present invention is not limited thereto.

### Negative Electrode Active Material

The negative electrode active material may be a material that reversibly intercalates/deintercalates lithium ions, a lithium metal, a lithium metal alloy, a material capable of doping and dedoping lithium, or a transition metal oxide.

The material that reversibly intercalates/deintercalates lithium ions may include a carbon-based negative electrode active material, for example, crystalline carbon, amorphous carbon and/or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and/or the like.

The lithium metal alloy may include lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a combination thereof). The Sn-based negative electrode active material may include Sn, SnOₓ (0 < x ≤ 2) (e.g., SnO₂), a Sn-based alloy, and/or a combination thereof.

The silicon-carbon composite may be a composite of silicon and amorphous carbon. According to one or more embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be utilized in combination with a carbon-based negative electrode active material.

### Negative Electrode

A negative electrode for a rechargeable lithium battery includes a current collector and a negative electrode active material layer on the current collector. The negative electrode active material layer includes a negative electrode active material and may further include a binder and/or a conductive material.

For example, the negative electrode active material layer may include 90 wt% to 99 wt% of the negative electrode active material, 0.5 wt% to 5 wt% of the binder, and 0.5 wt% to 5 wt% of the conductive material.

The binder may serve to attach the negative electrode active material particles well to each other and also to attach the negative electrode active material well to the current collector. The binder may include a non-aqueous binder, an aqueous binder, a dry binder, and/or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a combination thereof.

When an aqueous binder is utilized as the negative electrode binder, it may further include a cellulose-based compound capable of imparting viscosity. The cellulose-based compound includes one or more of carboxymethyl cellulose, hydroxypropylmethyl cellulose, methyl cellulose, or alkali metal salts thereof. The alkali metal may be Na, K, or Li.

The dry binder may be a polymer material capable of being fiberized, and may be, for example, polytetrafluoroethylene, polyvinylidene fluoride, polyvinylidene fluoride-hexafluoropropylene copolymer, polyethylene oxide, and/or a combination thereof.

The conductive material is included to provide electrode conductivity, and any electrically conductive material may be utilized as a conductive material unless it causes a chemical change. Examples of the conductive material may be a carbon-based material such as natural graphite, artificial graphite, carbon black, acetylene black, Ketjen black, a carbon fiber, a carbon nanofiber, a carbon nanotube, and/or the like; a metal-based material such as copper, nickel, aluminum silver, and/or the like in a form of a metal powder or a metal fiber; a conductive polymer such as a polyphenylene derivative; and/or a mixture thereof (e.g., a suitable mixture thereof).

The negative electrode current collector may include one selected from among a copper foil, a nickel foil, a stainless steel foil, a titanium foil, a nickel foam, a copper foam, a polymer substrate coated with a conductive metal, and/or a combination thereof, but the present invention is not limited thereto.

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a combination thereof on a surface (e.g., one or both surfaces (e.g., opposite surfaces or sides)) of the porous substrate.

The porous substrate may be a polymer film formed of any one selected from among polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The organic material may include a polyvinylidene fluoride-based polymer or a (meth)acrylic-based polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or a combination thereof, but the present invention is not limited thereto.

The organic material and the inorganic material may be mixed in one coating layer, or a coating layer including an organic material and a coating layer including an inorganic material may be stacked.

### Rechargeable Lithium Battery

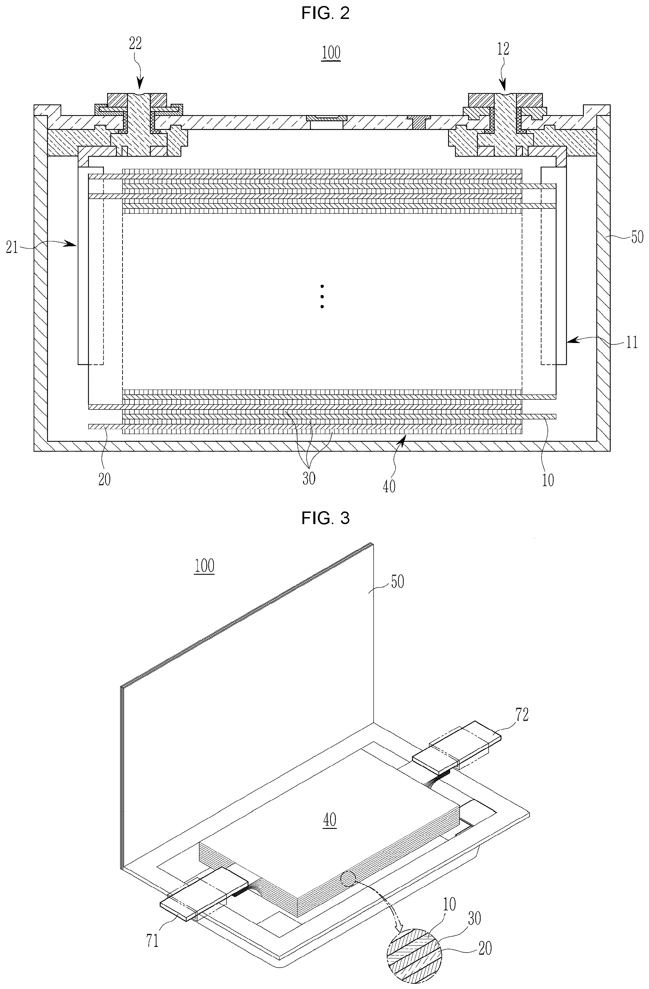

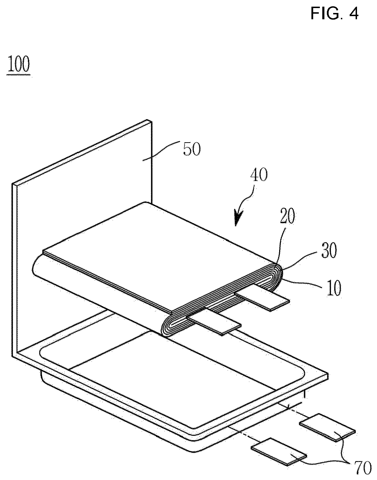

The rechargeable lithium battery may be classified into cylindrical, prismatic, pouch, or coin-type or kind batteries, and/or the like depending on their shape. FIGS. 1 to 4 are schematic views illustrating rechargeable lithium batteries according to one or more embodiments. FIG. 1 shows a cylindrical battery, FIG. 2 shows a prismatic battery, and FIGS. 3 and 4 show pouch-type or kind batteries. Referring to FIGS. 1 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte. The rechargeable lithium battery 100 may include a sealing member 60 sealing the case 50, as shown in FIG. 1. In FIG. 2, the rechargeable lithium battery 100 may include a positive lead tab 11, a positive terminal 12, a negative lead tab 21, and a negative terminal 22. As shown in FIGS. 3 and 4, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to one or more embodiments may be applied to automobiles, mobile phones, and/or one or more suitable types (kinds) of electrical devices, but the present inventions is not limited thereto.

Hereinafter, examples of the present invention and comparative examples are described. These examples, however, are not in any sense to be interpreted as limiting the scope of the present invention.

### Examples and Comparative Examples

### Electrolytes and rechargeable lithium battery cells were prepared as follows.

### Example 1

### (1) Preparation of Electrolyte

1.3 M LiPF₆ was dissolved in a non-aqueous organic solvent in which ethylene carbonate (EC), propylene carbonate (PC), ethyl propionate (EP), and propyl propionate (PP) were mixed in a volume ratio of 10:15:30:45, and 1 wt% of the first additive and 1 wt% of the second additive were added thereto to prepare an electrolyte.

The first additive represented by Chemical Formula 1-1-1 was utilized, and the second additive represented by Chemical Formula 2-1 was utilized:

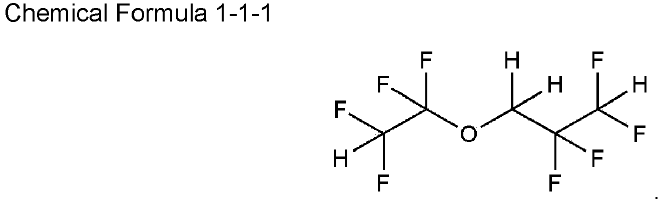

1,1,2,2-Tetrafluoroethyl2,2,3,3-tetrafluoropropylether (CAS No.: 16627-68-2)

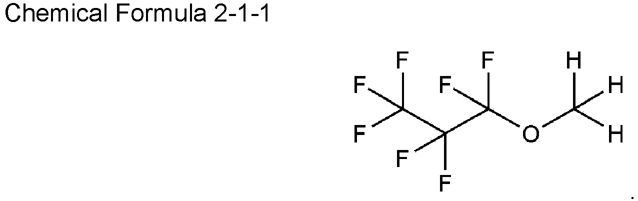

1,1,1,2,2,3,3-Heptafluoro-3-methoxypropane (CAS No.: 375-03-1)

### (2) Manufacture of Rechargeable Lithium Battery Cells

LiCoO₂ as a positive electrode active material, polyvinylidene fluoride as a binder, and acetylene black as a conductive material were mixed respectively in a weight ratio of 96:3:1, and then, dispersed in N-methyl pyrrolidone to prepare positive electrode active material slurry.

The positive electrode active material slurry was coated on a 15 µm-thick Al foil, dried at 100 °C, and pressed to manufacture a positive electrode.

Artificial graphite as a negative electrode active material, a styrene-butadiene rubber binder, and carboxymethyl cellulose in a weight ratio of 98:1:1 were dispersed in distilled water to prepare negative electrode active material slurry.

The negative electrode active material slurry was coated on an 10 µm-thick Cu foil, dried at 100 °C, and pressed to manufacture a negative electrode. At this time, an active mass density of the negative electrode was set to 1.7 g/cc.

An electrode assembly was manufactured by assembling the positive electrode, the negative electrode, and a separator made of polyethylene with a thickness of 10 µm, and the electrolyte was injected, to manufacture a rechargeable lithium battery cell.

### Example 2

An electrolyte and a rechargeable lithium battery cell were prepared in substantially the same manner as in Example 1, except that 1 wt% of the first additive and 3 wt% of the second additive were added when preparing the electrolyte.

### Example 3

An electrolyte and a rechargeable lithium battery cell were prepared in substantially the same manner as in Example 1, except that 1 wt% of the first additive and 5 wt% of the second additive were added when preparing the electrolyte.

### Example 4

An electrolyte and a rechargeable lithium battery cell were prepared in substantially the same manner as in Example 1, except that 3 wt% of the first additive and 3 wt% of the second additive were added when preparing the electrolyte.

### Example 5

An electrolyte and a rechargeable lithium battery cell were prepared in substantially the same manner as in Example 1, except that 5 wt% of the first additive and 5 wt% of the second additive were added when preparing the electrolyte.

### Example 6

An electrolyte and a rechargeable lithium battery cell were prepared in substantially the same manner as in Example 1, except that an active mass density was set to 1.75 g/cc when preparing a negative electrode.

### Example 7

An electrolyte and a rechargeable lithium battery cell were prepared in substantially the same manner as in Example 1, except that an active mass density was set to 1.8 g/cc when preparing a negative electrode.

### Comparative Example 1 (Ref.)

An electrolyte and a rechargeable lithium battery cell were prepared in substantially the same manner as in Example 1, except that no additives were added when preparing the electrolyte.

### Comparative Example 2

An electrolyte and a rechargeable lithium battery cell were prepared in substantially the same manner as in Example 1, except that the second additive was not added and 1 wt% of the first additive was added when preparing the electrolyte.

### Comparative Example 3

An electrolyte and a rechargeable lithium battery cell were prepared in substantially the same manner as in Example 1, except that the second additive was not added and 3 wt% of the first additive was added when preparing the electrolyte.

### Comparative Example 4

An electrolyte and a rechargeable lithium battery cell were prepared in substantially the same manner as in Example 1, except that the first additive was not added and 1 wt% of the second additive was added when preparing the electrolyte.

### Comparative Example 5

An electrolyte and a rechargeable lithium battery cell were prepared in substantially the same manner as in Example 1, except that the first additive was not added and 3 wt% of the second additive was added if preparing the electrolyte.

### Evaluation Examples

The negative electrode and rechargeable lithium battery cell were evaluated in the following manner.

### Evaluation 1: Impregnation Properties of Electrolytes to Negative Electrode

The negative electrode according to Example 1 was manufactured as a specimen with width x (e.g., *) length = 3 cm x 5 cm. 0.01 g of the electrolyte according to Example 1 was dropped on the specimen and left for 20 minutes. Thereafter, an amount of electrolyte immersed in the specimen among 100 wt% of the electrolyte dropped on the specimen was evaluated as a value from 0 to 5 according to the following criteria, and the evaluation results are shown in Table 1:
0: When the amount of electrolyte immersed in the specimen is 0 wt% or more and less than 10 wt%
1: When the amount of electrolyte immersed in the specimen is 10 wt% or more and less than 20 wt%
2: When the amount of electrolyte immersed in the specimen is 20 wt% or more and less than 40 wt%
3: When the amount of electrolyte immersed in the specimen is 40 wt% or more and less than 60 wt%
4: When the amount of electrolyte immersed in the specimen is 60 wt% or more and less than 80 wt%
5: When the amount of electrolyte immersed in the specimen is 80 wt% or more and less than 100 wt%

Examples 2 to 7 and Comparative Examples 1 to 5 were evaluated in substantially the same manner, and the evaluation results are shown in Table 1.

**Table 1**

| | Active mass density of negative electrode (g/cc) | Additive content in electrolyte (wt%) | | Impregnation properties of electrolyte to negative electrode |
|---|---|---|---|---|
| | | First additive | Second additive | |
| Comparative Example 1 | 1.68 | 0 | 0 | 0 |
| Comparative Example 2 | 1.68 | 1 | 0 | 1 |
| Comparative Example 3 | 1.68 | 3 | 0 | 2 |
| Comparative Example 4 | 1.68 | 0 | 1 | 1 |
| Comparative Example 5 | 1.68 | 0 | 3 | 2 |
| Example 1 | 1.68 | 1 | 1 | 5 |
| Example 2 | 1.68 | 1 | 3 | 5 |
| Example 3 | 1.68 | 1 | 5 | 5 |
| Example 4 | 1.68 | 3 | 3 | 5 |
| Example 5 | 1.68 | 5 | 5 | 5 |
| Example 6 | 1.75 | 1 | 1 | 5 |
| Example 7 | 1.8 | 1 | 1 | 4 |

### Evaluation 2: Evaluation of Room-temperature Charge and Discharge Cycle Characteristics

The rechargeable lithium battery cells were charged and discharged 200 times under the conditions of 25 °C, 2.0 C charge (CC/CV, 4.47 V, 0.025 C Cut-off)/ 1.0 C discharge (CC, 3V Cut-off).

The thickness increase rates were calculated according to Equation 1, capacity retention rates were calculated according to Equation 2, and the results are shown in Table 2. 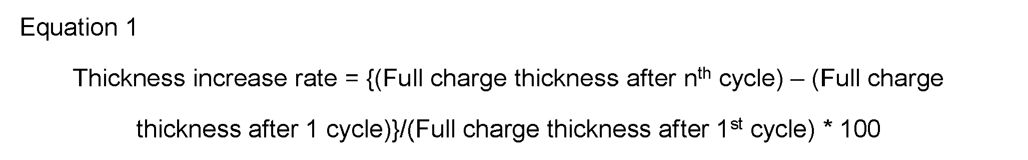 Thickness increase rate = {(Full charge thickness after nth cycle) - (Full charge thickness after 1 cycle)}/(Full charge thickness after 1st cycle) * 100 Equation 1

In Equation 1, "full charge thickness" refers to a thickness of the rechargeable lithium battery cells measured after charging at SOC 100% (if the total charge capacity of the battery is set at 100%, charged to 100% charge capacity) after each cycle. 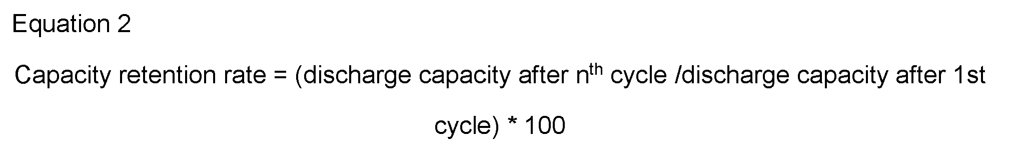 Capacity retention rate = (discharge capacity after nth cycle /discharge capacity after 1st cycle) * 100 Equation 2

**Table 2**

| | Room-temperature charge/discharge characteristics of rechargeable lithium battery cells | | | |
|---|---|---|---|---|
| | Thickness increase rate (%) @200 cyc. | Capacity retention rate @50 cyc. (%) | Capacity retention rate @100 cyc. (%) | Capacity retention rate @200 cyc. (%) |
| Comparative Example 1 | 17.7 | 85 | 0 | 0 |
| Comparative Example 2 | 15.0 | 88 | 0 | 0 |
| Comparative Example 3 | 12.5 | 90 | 86 | 0 |
| Comparative Example 4 | 12.5 | 88 | 86 | 78 |
| Comparative Example 5 | 10.7 | 89 | 87 | 78 |
| Example 1 | 7.3 | 91 | 89 | 87 |
| Example 2 | 7.0 | 91 | 89 | 86 |
| Example 3 | 7.1 | 91 | 88 | 86 |
| Example 4 | 7.0 | 92 | 90 | 87 |
| Example 5 | 7.1 | 91 | 89 | 85 |
| Example 6 | 7.9 | 91 | 87 | 80 |
| Example 7 | 8.2 | 90 | 85 | 78 |

### Summary

Referring to Tables 1 and 2, when an electrolyte including no additives at all (Comparative Example 1), a thickness of a battery cell including a negative electrode having relatively high density was increased and cycle-life was sharply reduced.

However, when active mass density of the negative electrode was equally set at 1.68 g/cc, compared to an electrolyte including no additives at all (Comparative Example 1), the electrolytes concurrently including the first and second additives (Examples 1 to 5) exhibited increased impregnation properties of the electrolytes to the negative electrodes, decreased thicknesses of battery cells at a relatively high temperature and a relatively high voltage, and increased cycle lives.

In contrast, in the case of the electrolytes including just one selected from among the first and second additives (Comparative Examples 2 and 3), impregnation properties of the electrolytes to the negative electrode were inferior and the amount of free liquid increased, and cycle-lives of the battery cells were sharply reduced as much as if utilizing an electrolyte without any additives (Comparative Example 1). Accordingly, it is desirable to utilize the electrolyte concurrently including the first and second additives.

Furthermore, the electrolyte concurrently including the first and second additives, even though active mass density of a negative electrode was increased from 1.68 g/cc to 1.8 g/cc (Examples 6 and 7), suppressed or reduced an increase in a battery thickness and a decrease in a cycle-life.

In present invention, "not include a or any 'component'", "exclude a or any 'component'", "'component'-free", and/or the like refers to that the "component" not being added, selected or utilized as a component in the composition or compound, but the "component" of less than a suitable amount may still be included due to other impurities and/or external factors.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the one or more suitable components of the device may be formed on one integrated circuit (IC) chip or on separate IC chips. Further, the one or more suitable components of the device may be implemented on a flexible printed circuit film, a tape carrier package (TCP), a printed circuit board (PCB), or formed on one substrate. Further, the one or more suitable components of the device may be a process or thread, running on one or more processors, in one or more computing devices, executing computer program instructions and interacting with other system components for performing the one or more suitable functionalities described herein. The computer program instructions are stored in a memory which may be implemented in a computing device utilizing a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of one or more suitable computing devices may be combined or integrated into a single computing device, or the functionality of a particular computing device may be distributed across one or more other computing devices without departing from the scope of the present invention.

In present invention, "not include a or any 'component'" "exclude a or any 'component'", "'component'-free", and/or the like refers to that the "component" not being added, selected or utilized as a component in the composition/structure, but the "component" of less than a suitable amount may still be included due to other impurities and/or external factors.

### Reference Numerals

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. An electrolyte for a rechargeable lithium battery, the electrolyte comprising:
a lithium salt;
a non-aqueous organic solvent;
a first additive represented by Chemical Formula 1-1-1: 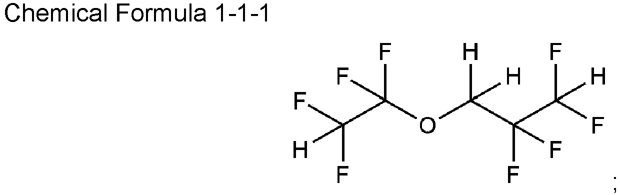 and
**characterised in that**, the electrolyte comprises
a second additive represented by Chemical Formula 2-1-1:

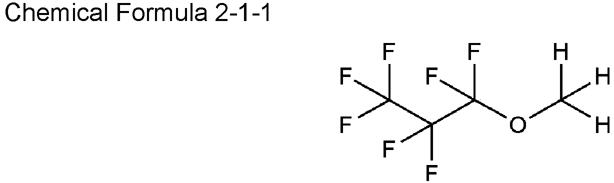

2. The electrolyte as claimed in any one of the preceding claims, wherein
the first additive is in an amount of 1 wt% to 10 wt% based on a total amount of the electrolyte; and/or
the second additive is in an amount of 1 wt% to 10 wt% based on a total amount of the electrolyte.

3. The electrolyte as claimed in claim 1 or 2, wherein
a weight ratio of the first additive and the second additive is 10:1 to 1:10.

4. The electrolyte as claimed in any one of the preceding claims, wherein
the non-aqueous organic solvent comprises a carbonate-based solvent and a propionate-based solvent.

5. The electrolyte as claimed in claim 4, wherein
the propionate-based solvent is in an amount greater than or equal to 70 volume% based on a total amount of the non-aqueous organic solvent.

6. The electrolyte as claimed in any one of the preceding claims, wherein
the lithium salt is LiPF₆.

7. The electrolyte as claimed in any one of the preceding claims, wherein
a concentration of the lithium salt is 0.1 M to 2.0 M.

8. A rechargeable lithium battery (100), comprising
a positive electrode (10) comprising a positive electrode active material;
a negative electrode (20) comprising a negative electrode active material; and
the electrolyte according to claim 1.

9. The rechargeable lithium battery (100) as claimed in claim 8, wherein
an active mass density of the negative electrode is greater than or equal to 1.68 g/cc.

10. The rechargeable lithium battery (100) as claimed in claim 8 or 9, wherein
the positive electrode active material comprises a lithium nickel-based oxide, a lithium cobalt-based oxide, a lithium manganese-based oxide, a lithium iron phosphate-based compound, a cobalt-free lithium nickel-manganese-based oxide, or a combination thereof.

11. The rechargeable lithium battery (100) as claimed in any one of claims 8 to 10, wherein
the negative electrode active material comprises a carbon-based negative electrode active material, a Si-based negative electrode active material, or a combination thereof.

## Patentansprüche

1. Elektrolyt für eine wiederaufladbare Lithiumbatterie, wobei der Elektrolyt Folgendes umfasst:
ein Lithiumsalz;
ein nichtwässriges organisches Lösungsmittel;
ein erstes Additiv, das durch die chemische Formel 1-1-1 dargestellt wird: 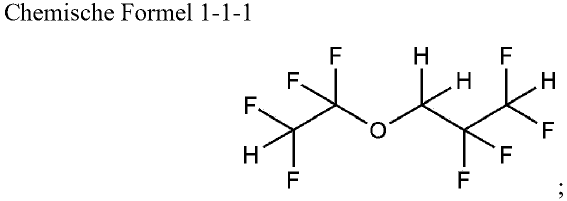 und
**dadurch gekennzeichnet, dass** der Elektrolyt
ein zweites Additiv umfasst, das durch die chemische Formel 2-1-1 dargestellt wird:

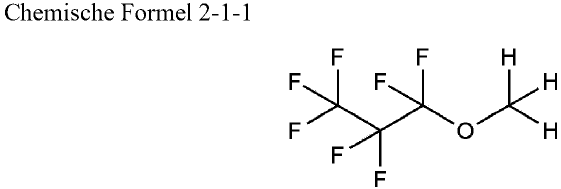

2. Elektrolyt nach einem der vorstehenden Ansprüche, wobei
das erste Additiv in einer Menge von 1 Gew.-% bis 10 Gew.-%, bezogen auf die Gesamtmenge des Elektrolyten, vorliegt; und/oder
das zweite Additiv in einer Menge von 1 Gew.-% bis 10 Gew.-%, bezogen auf die Gesamtmenge des Elektrolyten, vorliegt.

3. Elektrolyt nach Anspruch 1 oder 2, wobei
das Gewichtsverhältnis des ersten Additivs zum zweiten Additiv 10:1 bis 1:10 beträgt.

4. Elektrolyt nach einem der vorstehenden Ansprüche, wobei
das nichtwässrige organische Lösungsmittel ein Lösungsmittel auf Carbonatbasis und ein Lösungsmittel auf Propionatbasis umfasst.

5. Elektrolyt nach Anspruch 4, wobei
das Lösungsmittel auf Propionatbasis in einer Menge größer oder gleich 70 Vol.-%, bezogen auf die Gesamtmenge des nichtwässrigen organischen Lösungsmittels, vorliegt.

6. Elektrolyt nach einem der vorstehenden Ansprüche, wobei
das Lithiumsalz LiPF₆ ist.

7. Elektrolyt nach einem der vorstehenden Ansprüche, wobei
die Konzentration des Lithiumsalzes 0,1 M bis 2,0 M beträgt.

8. Wiederaufladbare Lithiumbatterie (100), umfassend
eine positive Elektrode (10), die ein aktives Material der positiven Elektrode umfasst;
eine negative Elektrode (20), die ein aktives Material der negativen Elektrode umfasst; und
den Elektrolyten nach Anspruch 1.

9. Wiederaufladbare Lithiumbatterie (100) nach Anspruch 8, wobei
die aktive Massendichte der negativen Elektrode größer oder gleich 1,68 g/cc ist.

10. Wiederaufladbare Lithiumbatterie (100) nach Anspruch 8 oder 9, wobei
das aktive Material der positiven Elektrode ein Oxid auf Lithium-Nickel-Basis, ein Oxid auf Lithium-Kobalt-Basis, ein Oxid auf Lithium-Mangan-Basis, eine Verbindung auf Lithium-Eisenphosphat-Basis, ein kobaltfreies Oxid auf Lithium-Nickel-Mangan-Basis oder eine Kombination davon umfasst.

11. Wiederaufladbare Lithiumbatterie (100) nach einem der Ansprüche 8 bis 10, wobei
das aktive Material der negativen Elektrode ein aktives Material der negativen Elektrode auf Kohlenstoffbasis, ein aktives Material der negativen Elektrode auf Si-Basis oder eine Kombination davon umfasst.

## Revendications

1. Électrolyte pour une batterie rechargeable au lithium, l'électrolyte comportant :
un sel de lithium ;
un solvant organique non aqueux ;
un premier additif représenté par la Formule chimique 1-1-1 : 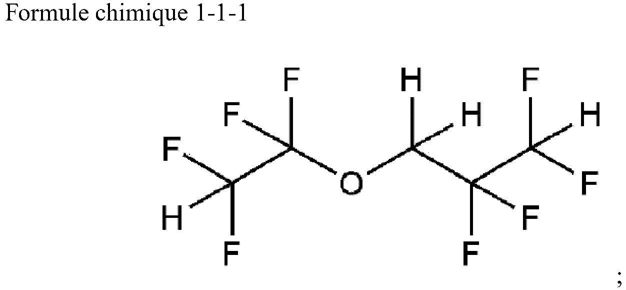 et
**caractérisé en ce que** l'électrolyte comporte
un deuxième additif représenté par la Formule chimique 2-1-1 :

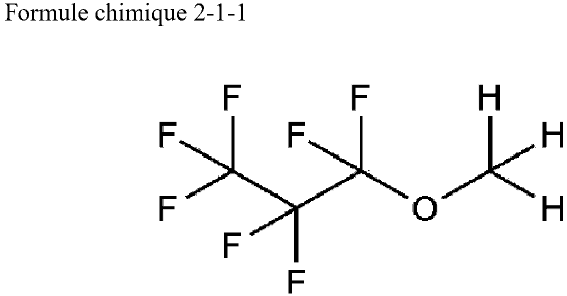

2. Électrolyte selon l'une quelconque des revendications précédentes, dans lequel le premier additif est présent en une quantité de 1 % en poids à 10 % en poids sur la base d'une quantité totale de l'électrolyte ; et/ou
le deuxième additif est présent en une quantité de 1 % en poids à 10 % en poids sur la base d'une quantité totale de l'électrolyte.

3. Électrolyte selon la revendication 1 ou 2, dans lequel
un rapport pondéral entre le premier additif et le deuxième additif est de 10:1 à 1:10.

4. Électrolyte selon l'une quelconque des revendications précédentes, dans lequel
le solvant organique non aqueux comporte un solvant à base de carbonate et un solvant à base de propionate.

5. Électrolyte selon la revendication 4, dans lequel
le solvant à base de propionate est présent en une quantité supérieure ou égale à 70 % en volume sur la base d'une quantité totale du solvant organique non aqueux.

6. Électrolyte selon l'une quelconque des revendications précédentes, dans lequel le sel de lithium est LiPF₆.

7. Électrolyte selon l'une quelconque des revendications précédentes, dans lequel une concentration en sel de lithium est de 0,1 M à 2,0 M.

8. Batterie rechargeable au lithium (100), comportant :
une électrode positive (10) comportant un matériau actif d'électrode positive ;
une électrode négative (20) comportant un matériau actif d'électrode négative ; et
l'électrolyte selon la revendication 1.

9. Batterie rechargeable au lithium (100) selon la revendication 8, dans laquelle une masse volumique active de l'électrode négative est supérieure ou égale à 1,68 g/cc.

10. Batterie rechargeable au lithium (100) selon la revendication 8 ou 9, dans laquelle le matériau actif d'électrode positive comporte un oxyde à base de lithium-nickel, un oxyde à base de lithium-cobalt, un oxyde à base de lithium-manganèse, un composé à base de lithium-fer-phosphate, un oxyde à base de lithium-nickel-manganèse sans cobalt, ou une combinaison de ceux-ci.

11. Batterie rechargeable au lithium (100) selon l'une quelconque des revendications 8 à 10, dans laquelle
le matériau actif d'électrode négative comporte un matériau actif d'électrode négative à base de carbone, un matériau actif d'électrode négative à base de Si, ou une combinaison de ceux-ci.
